# EUROPÄISCHE PATENTSCHRIFT

(11) **EP 2 146 190 B1**
(45) Veröffentlichungstag und Bekanntmachung des Hinweises auf die Patenterteilung: **19.11.2014**
(21) Anmeldenummer: 09009015.0
(22) Anmeldetag: 10.07.2009
(51) Int. Cl.: G01F 1/66, G10K 11/00

(54) **Ultraschallwandler**
Ultrasound converter
Convertisseur d'ultrasons

(30) Priorität: 15.07.2008 DE 102008050040
(43) Veröffentlichungstag der Anmeldung: 20.01.2010
(73) Patentinhaber: Krohne AG, 4019 Basel (CH)
(72) Erfinder: Van Klooster, Jereon Martin, 4003 DJ Tiel (NL); Huijzer, Arie, 3363 BS Sliedrecht (NL)
(74) Vertreter: Gesthuysen Patent- und Rechtsanwälte

(56) Entgegenhaltungen:
- DE-A1- 4 443 415
- US-A- 5 437 194
- US-B1- 7 086 286

## Beschreibung

Die Erfindung betrifft einen Ultraschallwandler zum Einbau in ein Messgerätegehäuse, wobei der Ultraschallwandler ein Wandlergehäuse und eine Gehäusehalterung umfasst, wobei das Wandlergehäuse im Einbauzustand über seine Sende- und/oder Empfangsseite mit einem Mediumdruck beaufschlagbar ist, wobei die Gehäusehalterung ein erstes Halterungselement mit einer Schulter und ein zweites Halterungselement umfasst, wobei das Wandlergehäuse das erste Halterungselement durchdringt und wobei sich an einer Seite des ersten Halterungselements die Schulter des ersten Halterungselements und eine Schulter des Wandlergehäuses gegenüberstehen. Dabei sind das Wandlergehäuse und die Gehäusehalterung im Einbauzustand in Richtung der resultierenden Druckbeaufschlagung durch einen Zwischenraum voneinander beabstandet, in dem wenigstens ein akustisches Entkopplungselement angeordnet ist. Das Wandlergehäuse bildet im Einbauzustand mit der Gehäusehalterung zumindest mittelbar wenigstens eine erste Kontaktfläche aus. Weiterhin hängt die Kraft, mit der das Wandlergehäuse im durch das Medium druckbeaufschlagten Einbauzustand zumindest mittelbar gegen die Gehäusehalterung in der ersten Kontaktfläche drückt, von der resultierenden Druckbeaufschlagung des Wandlergehäuses durch das Medium abhängt. Schließlich nimmt die Kraft und damit die Flächenpressung in der ersten Kontaktfläche mit zunehmendem Mediumdruck auch zu.

Ultraschallwandler sind seit vielen Jahren bekannt und werden beispielsweise bei akustischen Durchflußmeßgeräten in großem Umfang eingesetzt. Der Ultraschallwandler wandelt elektrische Energie in die Auslenkung einer Membran um, die an der Sende- und/oder Empfangsseite im Wandlergehäuse vorgesehen ist; in diesem Fall arbeitet der Ultraschallwandler als Ultraschallsender. Umgekehrt ist es auch möglich, dass die sende- und/oder empfangsseitig vorgesehene Membran durch externe - im Medium vorkommende - Druckschwankungen ausgelenkt und die Auslenkung in ein entsprechendes Signal umgewandelt wird; in diesem Fall arbeitet der Ultraschallwandler als Ultraschallempfänger. In manchen Anwendungen - wie z.B. der Füllstandsmessung - wird ein solcher Ultraschallwandler sowohl als Ultraschallsender als auch als Ultraschallempfänger eingesetzt, im Bereich der Durchflußmessung wird ein Ultraschallwandler häufig entweder als Ultraschallsender oder als Ultraschallempfänger eingesetzt.

Bei der akustischen Durchflußmessung wird meist der Effekt ausgenutzt, dass in einem in einem Meßrohr transportierten Medium der Ausbreitungsgeschwindigkeit des Schallsignals die Transportgeschwindigkeit des Mediums überlagert ist. Die gemessene Ausbreitungsgeschwindigkeit des Schallsignals gegenüber dem Meßrohr ist also größer als im ruhenden Medium, wenn das Medium in Richtung des Schallsignals transportiert wird, und die Geschwindigkeit des Schallsignals gegenüber dem Meßrohr ist geringer als im ruhenden Medium, wenn das Medium entgegengesetzt zu der Emissionsrichtung des Schallsignals transportiert wird. Die Laufzeit des Schallsignals zwischen dem Schallsender und dem Schallempfänger - beide sind Ultraschallwandlerhängt aufgrund des Mitführeffekts von der Transportgeschwindigkeit des Mediums gegenüber dem Meßrohr und damit gegenüber dem Schallsender und dem Schallempfänger ab.

Problematisch bei Messungen, die auf emittierten Schall- oder Ultraschallsignalen beruhen, ist, nicht nur im Bereich der Durchflußmessung, dass die in dem Ultraschallwandler erzeugten Ultraschallschwingungen nicht nur von der Sende- und/oder Empfangsseite des Wandlergehäuses in das umgebende Medium des Ultraschallwandlers übertragen werden, sondern dass die erzeugten Schwingungen über das Wandlergehäuse - ggf. über die Gehäusehalterung, sofern unterschiedlich vom Messgerätegehäuse - auf das Messgerätegehäuse übertragen werden. Dies ist nicht allein deshalb problematisch, weil so unter Umständen ein erheblicher Teil der Sendeleistung "verloren" geht, sondern es ist vielmehr vor allem deshalb problematisch, weil die so durch sogenanntes Übersprechen auf das Messgerätegehäuse übertragenen Ultraschallwellen auch zu einer erheblichen empfangsseitigen Störung führen können. Das ist darin begründet, dass empfangsseitig beispielsweise nicht unterschieden werden kann, ob die empfangenen Ultraschallsignale über das Medium empfangen worden sind - Nutzsignal - oder über das Messgerätegehäuse, wobei die über das Messgerätegehäuse übertragenen Ultraschallsignale dann wiederum Übersprechen in das Wandlergehäuse des empfangenden Ultraschallwandlers.

Insbesondere bei Gas-Anwendungen, bei denen das Medium also aus einem Gas besteht, ist der von dem Ultraschallwandler in das gasförmige Medium übermittelte Anteil der Schwingungsenergie gegenüber der insgesamt erzeugten Schwingungsenergie sehr gering, so dass das Problem des Übersprechens hier besonders drängend ist.

Aus dem Stand der Technik sind verschiedene Maßnahmen bekannt, wie das Übersprechen von Ultraschallschwingungen vom eigentlichen Schwingungserzeuger im Wandlergehäuse auf das Wandlergehäuse und weiter auf das Messgerätegehäuse reduziert werden kann. Einige dieser Verfahren beruhen darauf, dass der Übertragungsweg von dem Ultraschallerzeuger - z. B. Piezoelement auf der Sende- und/oder Empfangsseite des Wandlergehäuses - zu dem Übergang auf das Messgerätegehäuse konstruktiv verlängert wird. Andere Maßnahmen betreffen Versuche, die Ultraschallquelle von dem Rest des Ultraschallwandlers und/oder von dem Messgerätegehäuse akustisch zu entkoppeln, beispielsweise indem akustische Übergänge mit Materialien geschaffen werden, die im Ergebnis eine schlechte Impedanzanpassung und damit die Übertragung eines geringeren Energieanteils bewirken. Häufig werden mehrere Maßnahmen miteinander kombiniert.

Bei Gas-Anwendungen stellt sich zudem das Problem, dass der Anteil der direkt in das gasförmige Medium übertragenen Energie stark abhängig ist von dem Druck und daher der Dichte des Mediums. Druckschwankungen führen also dazu, dass das Verhältnis der Nutzsignalenergie zu der Übersprechsignal-Energie stark variiert, wodurch die auf Signalpegeln oder Signalpegel-Verhältnissen beruhende Auswertung von Ultraschallsignalen erschwert wird.

Der Patentschrift US 5,437,194 offenbart einen über zwei flexible O-Ringe gehalterten Ultraschallwandler. Das Gehäuse des Ultraschallwandlers weist hierbei einen Flansch auf, an dessen beiden Seiten die O-ringe anliegen. Befestigt wird das Gehäuse in einer Öffnung einer Behälterwandung über eine Gehäusehalterung, wobei ein Gewinde auf der Außenseite der Gehäusehalterung und ein korrespondierendes Gewinde der Behälterwandung zusammenwirken. Durch Einschrauben der Gehäusehalterung in das Gewinde kann über den ersten der beiden O-Ringe Druck auf den Flansch des Wandlergehäuses ausgeübt werden. Über den zweiten O-Ring stützt sich der Flansch des Wandlergehäuses an einem korrespondierenden Vorsprung der Öffnung ab. Insgesamt wird über die beiden Gewinde eine Flächenpressung zwischen dem Wandlergehäuse und der Gehäusehalterung mittelbar, d. h. über die O-Ringe aufgebracht.

Aufgabe der vorliegenden Erfindung ist es daher, einen Ultraschallwandler zum Einbau in ein Messgerätegehäuse anzugeben, der eine weitere Maßnahme zur Vermeidung des Übersprechens von Ultraschallsignalen realisiert und die aus dem Stand der Technik bekannten Nachteile - zumindest teilweise - vermeidet.

Der erfindungsgemäße akustische Ultraschallwandler, bei dem die zuvor hergeleitete und aufgezeigte Aufgabe gelöst ist, ist zunächst und im wesentlichen dadurch gekennzeichnet, dass im Bereich der anderen Seite des ersten Halterungselements das zweite Halterungselement mit dem Wandlergehäuse verbunden ist und dem ersten Halterungselement sperrend gegenübersteht, dass ein Vorspannungsmittel zwischen dem ersten Halterungselement und dem zweiten Halterungselement vorgesehen ist und sich zum einen an dem ersten Halterungselement abstützt und sich zum anderen entweder an dem zweiten Halterungselement oder an dem Wandlergehäuse abstützt, dass durch das Vorspannungsmittel das Wandlergehäuse und die Gehäusehalterung zumindest mittelbar in der ersten Kontaktfläche mit vorhandener aber möglichst geringer Flächenpressung gegeneinander gedrückt sind und dass das Vorspannungsmittel insgesamt so zwischen dem Wandlergehäuse und der Gehäusehalterung wirksam ist, dass das Vorspannungsmittel bei zunehmendem Mediumdruck zunehmend entspannt wird. Durch die mit einer möglichst geringen Flächenpressung realisierte Lagerung des Wandlergehäuses in der Gehäusehalterung wird eine hervorragende akustische Entkopplung zwischen dem Wandlergehäuse einerseits und der Gehäusehalterung andererseits erzielt, so dass ein Übersprechen der Ultraschallwellen effektiv vermindert wird. Da insgesamt eine - wenn auch möglichst geringe - zumindest mittelbaren Flächenpressung zwischen der Gehäusehalterung und dem Wandlergehäuse realisiert ist, sind Gehäusehalterungen und Wandlergehäuse definiert zueinander gelagert, so dass der Ultraschallwandler eine definierte Außengeometrie auch dann besitzt, wenn er nicht von einem Mediumdruck mit Kraft beaufschlagt wird.

Der erfindungsgemäßen Maßnahme liegt auch die Erkenntnis zugrunde, dass die Schall- und damit Ultraschallübertragung zwischen zwei Festkörpern nicht nur von deren Materialeigenschaften und Geometrie abhängig ist, sondern auch davon, wie der Grenzübergang konkret beschaffen ist. Die Schallübertragung von einem Festkörper in einen benachbarten Festkörper ist beispielsweise auch davon abhängig, ob diese benachbarten Festkörper aneinander gedrückt sind, mit welcher Kraft sie aneinander gedrückt sind - bzw. welche Flächenpressung in der Kontaktfläche realisiert ist-, oder ob diese benachbarten Festkörper nur kraftfrei nebeneinander liegen. Mit zunehmender Flächenpressung wird auch die Schallübertragung zwischen zwei Festkörpern besser. Mit der erfindungsgemäßen Auslegung des Vorspannungsmittels wird also erreicht, dass eine kleinstmögliche Ausgangs-Flächenpressung und damit Schallübertragungsfähigkeit in dem Ultraschallwandler realisiert ist, bei definierter Lage der Gehäusehalterung und des Wandlergehäuses zueinander.

Die Wandlergehäuse von Ultraschallwandlern sind üblicherweise längserstreckt, wobei sich an einem Ende dieses längserstreckten Wandlergehäuses die eigentliche Ultraschallquelle befindet, meist in Form eines Piezokristalls. Der Piezokristall lenkt einem Membran aus, wodurch Ultraschallwellen in axialer Erstreckungsrichtung des Wandlergehäuses emittiert werden.

Umgekehrt bedeutet dies, dass ein außerhalb des Wandlergehäuses vorliegender Druck des umgebenden Mediums auf das Wandlergehäuse wirkt, eine resultierende Druckbeaufschlagung und damit resultierende Kraftwirkung jedoch nur in dieser axialen Richtung der Längserstreckung des Wandlergehäuses erfolgt, nämlich auf die an der Sende- und/oder Empfangsseite vorgesehene Membran. Der vorhandene Mediumdruck bewirkt also eine resultierende Kraftwirkung P auf das Wandlergehäuse, bei üblichen Bauformen in einer axialen Richtung des Wandlergehäuses.

Es ist vorgesehen, dass die Kraft, mit der das Wandlergehäuse im durch das Medium druckbeaufschlagten Einbauzustand zumindest mittelbar gegen die Gehäusehalterung in der ersten Kontaktfläche drückt, von der resultierenden Druckbeaufschlagung des Wandlergehäuses durch das Medium abhängt, die Kraft und damit die Flächenpressung in der ersten Kontaktfläche mit zunehmendem Mediumdruck auch zunimmt. Durch diese Maßnahme wird die vorbeschriebene Erkenntnis genutzt, dass die Übertragung von Ultraschallwellen von einem Festkörper zu einem anderen Festkörper dadurch gefördert wird, dass die Flächenpressung in der Kontaktfläche zwischen den beiden Festkörpem - hier Wandlergehäuse und Gehäusehalterung - erhöht wird.

Dabei kann die Flächenpressung zwischen Gehäusehalterung und Wandlergehäuse auch mittelbar über einen zwischen Gehäusehalterung und Wandlergehäuse befindlichen Festkörper vermittelt werden, dann ist die genannte erste Kontaktfläche ausgebildet zwischen Gehäusehalterung und vermittelndem Festkörper einerseits und vermittelndem Festkörper und dem Wandlergehäuse andererseits; das ist damit gemeint, wenn gesagt wird, dass das Wandlergehäuse im Einbauzustand mit der Gehäusehalterung mittelbar eine erste Kontaktfläche ausbildet, wobei dann zwangsläufig meist eine zweite Kontaktfläche entsteht.

Im druckfreien Zustand des Mediums stehen aufgrund der erfindungsgemäßen Vorgaben das Wandlergehäuse und die Gehäusehalterung mit geringstmöglicher Flächenpressung - zumindest mittelbar - miteinander in Kontakt, es werden praktisch keine Ultraschallwellen von dem Wandlergehäuse in die Gehäusehalterung übertragen. Bei der vorbeschriebenen Lagerung des Wandlergehäuses in der Gehäusehalterung nimmt die Kraft, mit der das Wandlergehäuse gegen die Gehäusehalterung drückt - und zwar in Richtung der resultierenden Druckbeaufschlagung - mit zunehmendem Mediumdruck zu. Dadurch wird zwar einerseits das Übersprechen von Ultraschallwellen von dem Wandlergehäuse in die Gehäusehalterung gefördert, andererseits wird jedoch auch ein zunehmender Teil der Schallenergie in das Medium abgestrahlt.

Vor allem bei gasförmigen Medien geht ein steigender Mediumdruck auch mit einer zunehmenden Dichte des Mediums einher, so dass in dem Maße, in dem der Mediumdruck zunimmt und das Übersprechen von Ultraschallwellen von dem Wandlergehäuse in die Gehäusehalterung gefördert wird, auch die Übertragung von Ultraschallwellen von der Sende- und/oder Empfangsseite des Wandlergehäuses in das Medium gefördert wird. Im Ergebnis wird durch diese Maßnahme erreicht, dass das Verhältnis von Nutzsignalleistung zur Leistung des Übersprechsignals gleich bleibt, sich jedenfalls bei einer Veränderung des Mediumdrucks weniger stark ändert, als dies bei bekannten Konstruktionen der Fall ist, insbesondere bei solchen Konstruktionen, bei denen die mit Hilfe des Vorspannungsmittels hervorgerufene Flächenpressung weitaus größer ist als die Flächenpressung in der ersten Kontaktfläche, die durch die Druckbeaufschlagung durch das Medium resultiert.

Bei dem erfindungsgemäßen Ultraschallwandler ist vorgesehen, dass das Vorspannungsmittel insgesamt so zwischen dem Wandlergehäuse und der Gehäusehalterung wirksam ist, dass das Vorspannungsmittel bei zunehmendem Mediumdruck zunehmend entspannt wird. Durch diese Ausgestaltung und Anordnung des Vorspannungsmittels wird ein zusätzlicher Kompensationseffekt hinsichtlich der Ultraschallübertragung erzielt. Es ist ohne weiteres einsichtig, dass zum Aufbringen der - zumindest mittelbar wirkenden - Flächenpressung zwischen der Gehäusehalterung und dem Wandlergehäuse das Vorspannungsmittel - wenn auch nicht direkt, so doch mechanisch mittelbar - mit der Gehäusehalterung und dem Wandlergehäuse in Kontakt stehen muss, so dass sich auch hier eine Schallbrücke zwischen dem Wandlergehäuse und der Gehäusehalterung ausbildet. Auch die Kontaktflächen zwischen dem Vorspannnungsmittel und dem Wandlergehäuse bzw. zwischen dem Vorspannungsmittel und der Gehäusehalterung unterliegen der gleichen Gesetzmäßigkeit der zunehmenden Schallübertragungsfähigkeit bei zunehmender Flächenpressung. Wenn das "Vorspannungsmittel jedoch wie zuvor beschrieben angeordnet und eingesetzt ist, wird bei zunehmendem Mediumdruck zwar die Schallübertragung von dem Wandlergehäuse auf die Gehäuschalterung verbessert, jedoch nimmt gleichzeitig die Schallübertragungsfähigkeit des Vorspannungsmittels aufgrund der dort abnehmenden Flächenpressung ab.

Weiterhin ist bei dem erfindungsgemäßen Ultraschallwandler vorgesehen, dass die Gehäusehalterung ein erstes Halterungselement und ein zweites Halterungselement umfasst, wobei das erste Halterungselement und das zweite Halterungselement im Montagezustand einen Freiraum bilden, in dem ein Abschnitt des Wandlergehäuses gelagert ist, wobei sich der Abschnitt des Wandlergehäuses in Richtung und entgegengesetzt der Richtung der resultierenden Druckbeaufschlagung -mittelbar oder unmittelbar - an dem ersten Halterungselement und an dem zweiten Halterungselement abstützt, das erste Halterungselement und das zweite Halterungselement also den Abschnitt des Wandlergehäuses quasi einklemmen und so das Wandlergehäuse insgesamt halten. Ausgehend davon ist insbesondere vorgesehen, dass das erste Halterungselement von einem mit einer Ausnehmung versehenen Abschnitt des Messgerätegehäuses gebildet ist, wobei das Wandlergehäuse in die Ausnehmung des Messgerätegehäuses einsetzbar ist, und dass das zweite Halterungselement von einer in die Ausnehmung des Abschnitts des Messgerätgehäuses einsetzbaren und mit dem Abschnitt des Messgerätegehäuses verbindbaren Hülse gebildet ist.

Der Anpressdruck lässt sich bei den letztgenannten Varianten dann besonders einfach einstellen, wenn das zweite Halterungselement in das erste Halterungselement einschraubbar ist und das Vorspannungsmittel durch Zusammenwirken eines Gewindes des zweiten Halterungselements mit einem korrespondierenden Gewindegang des ersten Halterungselements realisiert ist.

Erfindungsgemäße Ultraschallwandler sind bevorzugt so ausgelegt, dass die durch das Vorspannungsmittel verursachte - zumindest mittelbare - Flächenpressung in der ersten Kontaktfläche kleiner als 10 MPa ist, vorzugsweise kleiner als 7 MPa, ganz bevorzugt kleiner als 6 MPa ist und ganz besonders bevorzugt kleiner als 5 MPa ist. In diesem Zusammenhang hat es sich als vorteilhaft herausgestellt, wenn die durch das Vorspannungsmittel verursachte - zumindest mittelbare - Flächenpressung in der ersten Kontaktfläche größer als 0,001 MPa ist, vorzugsweise größer als 0,005 MPa ist, ganz bevorzugt größer als 0,01 MPa ist und ganz besonders bevorzugt größer als 0,05 MPa ist. Es hat sich herausgestellt, dass Ultraschallwandler mit einer Flächenpressung in der ersten Kontaktfläche zwischen 0,05 MPa und 5 MPa auch in der Herstellung problemlos zu realisieren sind.

Eine weitere Verbesserung bei der Unterdrückung der Ultraschallübertragung wird bei einer bevorzugten Ausgestaltung der Erfindung insbesondere dadurch erreicht, dass Material und/oder Abmessungen des Entkopplungselements so gewählt sind, dass eine möglichst geringe resultierende akustische Impedanzanpassung zwischen dem Wandlergehäuse und dem Entkopplungselement und/oder dem Entkopplungselement und der Gehäusehalterung realisiert ist. Durch die schlechte Impedanzanpassung wird erreicht, dass nur ein geringer Anteil der Ultraschallenergie an den Kontaktflächen transmittiert wird, vielmehr ein großer Teil der Ultraschallwellen reflektiert wird, jedenfalls nicht in die Gehäusehalterung bzw. in das Gehäuse gelangt.

Im Einzelnen gibt es nun verschiedene Möglichkeiten, den erfindungsgemäβen Ultraschallwandler auszugestalten und weiterzubilden. So wird verwiesen auf die dem Patentanspruch 1 nachgeordneten Patentansprüche und auf die Beschreibung eines bevorzugten Ausführungsbeispiels in Verbindung mit der Zeichnung. In der Zeichnung zeigen
- Fig. 1: einen Querschnitt durch einen Ultraschallwandler im Einbauzustand,
- Fig. 2: eine Detaildarstellung eines Übergangs von Wandlergehäuse zu Gehäusehalterung gemäß Fig. 1,
- Fig. 3: ein weiteres Ausführungsbeispiel eines Ultraschallwandlers mit zusätzlichem Entkopplungselement und
- Fig. 4: ein weiteres Ausführungsbeispiel eines erfindungsgemäßen Ultraschallwandlers mit mehreren Entkopplungselementen.

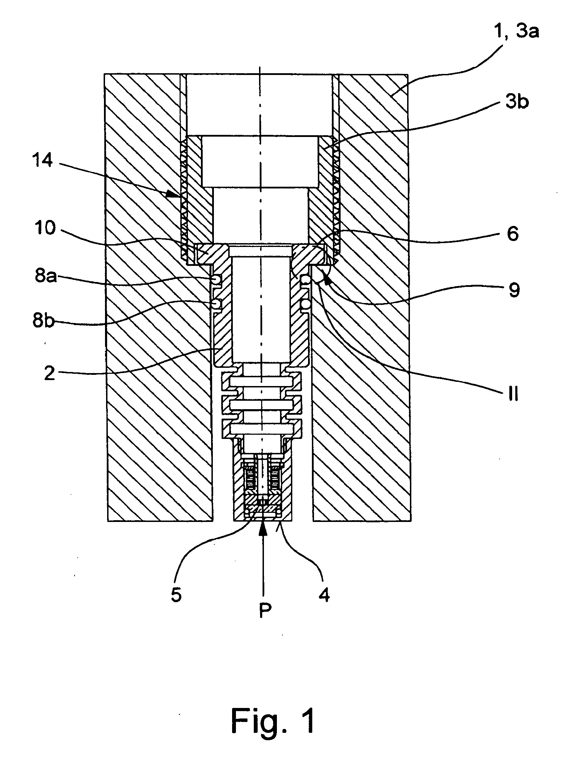

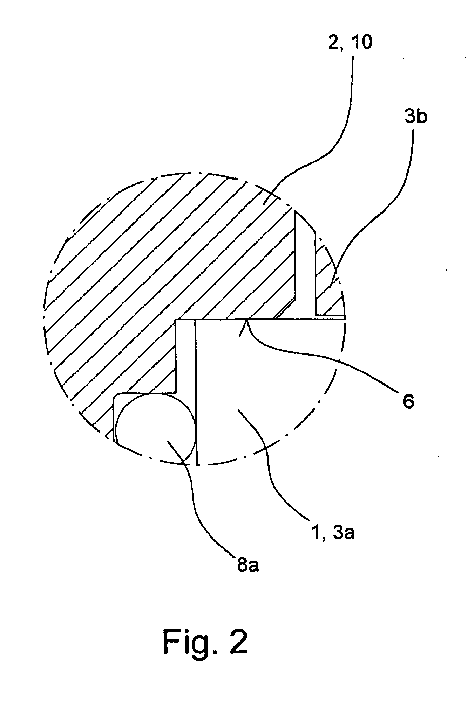

Die Fig. 1 bis 4 zeigen schematische Darstellungen von Längsschnitten durch Ultraschallwandler, die zum Einbau in ein Messgerätegehäuse 1 vorgesehen sind, wobei das Messgerätegehäuse 1 lediglich in den Fig. 1 bis 3 dargestellt ist. Der Ultraschallwandler umfasst ein Wandlergehäuse 2 und eine Gehäusehalterung 3a, 3b, wobei das Wandlergehäuse 2 im Einbauzustand über seine Sende- und/oder Empfangsseite 4 mit einem Mediumdruck beaufschlagbar ist; das Medium ist in den Figuren nicht explizit dargestellt.

Die Figuren sind insoweit schematisch, als dass nur die im Wesentlichen interessierenden Bestandteile des Ultraschallwandlers dargestellt sind. Beispielsweise nicht dargestellt ist eine Verkabelung des eigentlichen Ultraschallerregers 5, der in den Ausführungsbeispielen ein Piezoelement ist. Es ist vorliegend auch nicht von Bedeutung, ob das Wandlergehäuse 2 ein- oder mehrstückig ausgeführt ist, wie der Kopf des Ultraschallwandlers im Detail aufgebaut ist und aus welchem Material beispielsweise der Ultraschallwandler an seiner Sende- und/oder Empfangsseite 4 besteht; dies wird im Folgenden auch nicht weiter erläutert.

Die dargestellten Ultraschallwandler zeichnen sich insgesamt dadurch aus, dass das Wandlergehäuse 2 im Einbauzustand mit der Gehäusehalterung 3a, 3b zumindest mittelbar eine erste Kontaktfläche 6 ausbildet und durch ein Vorspannungsmittel 14 das Wandlergehäuse 2 und die Gehäusehalterung 3a, 3b zumindest mittelbar in der ersten Kontaktfläche 6 mit vorhandener aber möglichst geringer Flächenpressung gegeneinander gedrückt sind. Dadurch wird - wie eingangs beschrieben - erreicht, dass eine schlechte Schallübertragung zwischen dem Wandlergehäuse 2 und der Gehäusehalterung 3a, 3b realisiert ist bei gleichzeitig definierter Positionierung des Wandlergehäuses 2 gegenüber der Gehäusehalterung 3a, 3b.

In den Figuren ist zu erkennen, dass die Sende- und Empfangsseite 4 des Ultraschallwandlers einem Medium ausgesetzt werden kann und infolge dessen auch dem in dem Medium vorherrschenden Druck ausgesetzt ist. In den dargestellten Ausführungsbeispielen führt dieser Mediumdruck im Ergebnis zu einer resultierenden Druckbeaufschlagung in der mit P gekennzeichneten Richtung.

Wenn davon die Rede ist, dass das Wandlergehäuse 2 und die Gehäusehalterung 3a, 3b mit einer vorhandenen aber möglichst geringen Flächenpressung gegeneinander gedrückt sind, dann betrifft dies die durch den Einsatz des Vorspannungsmittels 14 konstruktiv bedingte Flächenpressung, nicht jedoch Kraftwirkungen, die sich durch äußere Einflüsse ergeben, also beispielsweise durch eine von dem Wandlergehäuse 2 auf die Gehäusehalterung 3a, 3b ausgeübte Gewichtskraft oder durch eine Druckwirkung.

Dadurch, dass das Wandlergehäuse 2 und die Gehäusehalterung 3a, 3b durch das Vorspannungsmittel 14 durch eine möglichst geringe Flächenpressung - insbesondere in Richtung P der möglichen resultierenden Druckbeaufschlagung - gegeneinander drücken, wird erreicht, dass ein Übersprechen von Ultraschallsignalen von dem Wandlergehäuse 2 auf die Gehäusehalterung 3a, 3b weitestgehend vermieden wird mangels einer für die Ultraschallübertragung notwendigen, durch eine hohe Flächenpressung innig ausgebildeten ersten Kontaktfläche 6. Die geringe Flächenpressung lässt nur eine geringe Ultraschallübertragung zu.

Vorteilhaft ist bei allen dargestellten Ausführungsbeispielen, dass die Kraft, mit der das Wandlergehäuse 2 im durch das Medium druckbeaufschlagten Einbauzustand zumindest mittelbar gegen die Gehäusehalterung 3a, 3b in wenigstens der ersten Kontaktfläche 6 drückt, von der resultierenden Druckbeaufschlagung des Wandlergehäuses 2 durch das Medium abhängt, die Kraft, und damit die Flächenpressung in der ersten Kontaktfläche 6, mit zunehmendem Mediumdruck auch zunimmt. Wie zuvor bereits erläutert worden ist, hat dies insbesondere bei gasförmigen Medien den Vorteil, dass bei zunehmendem Anpressdruck des Wandlergehäuses 2 - mittelbar oder unmittelbar - an die Gehäusehalterung 3a, 3b - also bei zunehmender Flächenpressung - zwar das Übersprechen von Ultraschallsignalen bessere Voraussetzungen findet, gleichzeitig jedoch aufgrund der höheren Dichte des Mediums - bedingt durch den höheren Druck - auch eine bessere Übertragung von Ultraschallsignalen von dem Ultraschallwandler auf das Medium möglich ist, so dass sich das Verhältnis von der Leistung des Nutzsignals zu der Leistung des Übersprechsignals geringfügig oder gar nicht verändert.

In den in den Figuren dargestellten Ausführungsbeispielen beträgt die durch das Vorspannungsmittel 14 verursachte, zumindest mittelbare Flächenpressung in der ersten Kontaktfläche 6 etwa 2 MPa, ein Wert, der feinmechanisch und konstruktiv gut handhabbar ist.

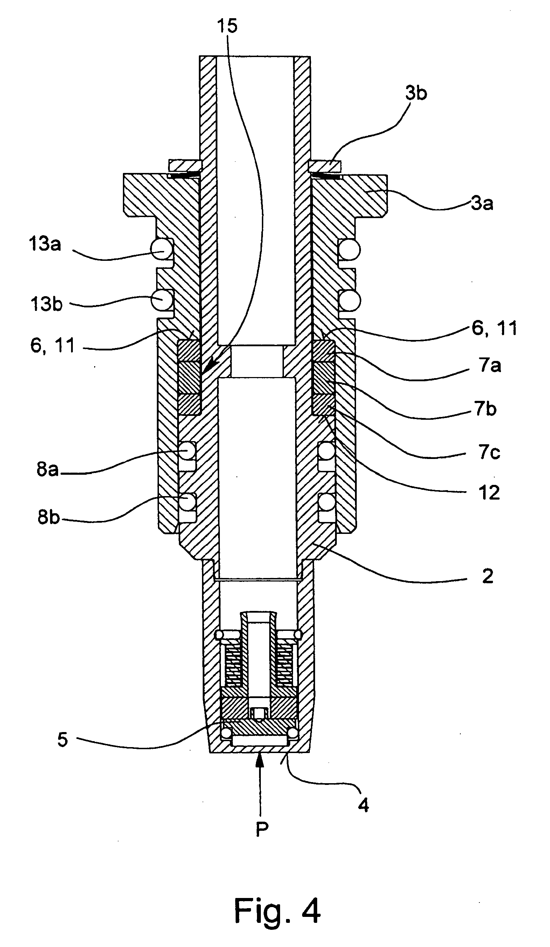

Der erfindungsgemäße Ultraschallwandler gemäß Fig. 4 zeichnet sich dadurch aus, dass das Vorspannungsmittel 14 so zwischen dem Wandlergehäuse 2 und der Gehäusehalterung 3a, 3b wirksam ist, dass das Vorspannungsmittel 14 bei zunehmendem Mediumdruck zunehmend entspannt wird. Dies wird bei dem Ultraschallwandler gemäß Fig. 4 dadurch erreicht, dass die Gehäusehalterung 3a, 3b ein erstes Halterungselement 3a und ein zweites Halterungselement 3b umfasst, wobei das Wandlergehäuse 2 das erste Halterungselement 3 a durchdringt, sich an einer Seite des ersten Halterungselements 3a eine Schulter 11 des ersten Halterungselements 3a und eine Schulter 12 des Wandlers 2 gegenüberstehen, und im Bereich der anderen Seite des ersten Halterungselements 3a das zweite Halterungselement 3b mit dem Wandlergehäuse 2 verbunden ist und dem ersten Halterungselement 3a sperrend gegenübersteht, wobei das zweite Halterungselement 3b ein formschlüssiger Sicherungsring ist.

Das Vorspannungselement 14 hat bei dem Ultraschallwandler gemäß Fig. 4 direkten Kontakt mit dem ersten Halterungselement 3a und dem zweiten Halterungselement 3b, wobei das zweite Halterungselement 3b die von dem Vorspannungsmittel 14 bewirkte Kraft in das Wandlergehäuse 2 einleitet. Wenn durch zunehmenden Druck das Wandlergehäuse 2 zunehmend in die Gehäusehalterung 3a gedrückt wird, wird der Spalt zwischen dem ersten Halterungselement 3a und dem zweiten Halterungselement 3b, in dem das Vorspannungsmittel 14 angeordnet ist, größer, so dass auch die von dem Vorspannungsmittel 14 aufgebrachte Kraft kleiner wird. Dadurch wird auch die Flächenpressung zwischen dem Vorspannungsmittel 14 und dem ersten Halterungselement 3a und dem zweiten Halterungselement 3b geringer, so dass das Vorspannungsmittel 14 mit zunehmendem Mediumdruck immer weniger geeignet ist, Ultraschallwellen von dem Wandlergehäuse 2 in die Gehäusehalterung 3a, 3b zu übertragen.

In einer anderen Variante, bei der das Vorspannungsmittel 14 zwischen dem ersten Halterungselement 3a und dem zweiten Halterungselement 3b vorgesehen ist, stützt das Vorspannungsmittel 14 einerseits an dem ersten Halterungselement 3a ab und andererseits direkt an dem Wandlergehäuse 2, dies ist hier jedoch nicht dargestellt. In Fig. 4 ist das Vorspannungsmittel 14 als Federscheibe ausgestaltet, vorliegend als gewölbte Federscheibe.

Bei dem in den Fig. 1 bis 3 dargestellten Ultraschallwandler umfasst die Gehäusehalterung 3a, 3b ebenfalls ein erstes Halterungselement 3a und ein zweites Halterungselement 3b, wobei das erste Halterungselement 3a und das zweite Halterungselement 3b einen Freiraum 9 bilden, in dem ein Abschnitt 10 des Wandlergehäuses 2 gelagert ist, wobei sich der Abschnitt 10 des Wandlergehäuses 2 in Richtung P und entgegengesetzt der Richtung P der resultierenden Druckbeaufschlagung - mittelbar oder unmittelbar - an dem ersten Halterungselement 3a und an dem zweiten Halterungselement 3b abstützt.

Das erste Halterungselement 3a wird von einem mit einer Ausnehmung versehenen Abschnitt des Messgerätegehäuses 1 gebildet, wobei das Wandlergehäuse 2 in die Ausnehmung des Messgerätegehäuses 1 eingesetzt ist. Das zweite Halterungselement 3b ist von einer in die Ausnehmung des Abschnitts des Messgerätegehäuses 1 einsetzbaren und mit dem Abschnitt des Messgerätegehäuses 1 verbindbaren Hülse gebildet. Das zweite Halterungselement 3b ist vorliegend in das erste Halterungselement 3a einschraubbar, und das Vorspannungsmittel 14 wird durch das Zusammenwirken des Gewindes des zweiten Halterungselements 3b mit dem korrespondierenden Gewindegang des ersten Halterungselements 3a realisiert. Durch Messung des Drehmoments beim Anziehen der Hülse können recht einfach die in axialer Richtung wirkenden Kräfte und damit die insgesamt wirkende Flächenpressung ermittelt und bestimmt werden, so dass die geforderte vorhandene, aber möglichst geringe Flächenpressung leicht einstellbar ist.

Das Gewinde zwischen dem ersten Halterungselement 3a und dem zweiten Halterungselement 3b ist so ausgelegt, dass die Gewindekontaktfläche eine von dem Vorspannungsmittel 14 verursachte maximale Flächenpressung von etwa 7 MPa aufweist.

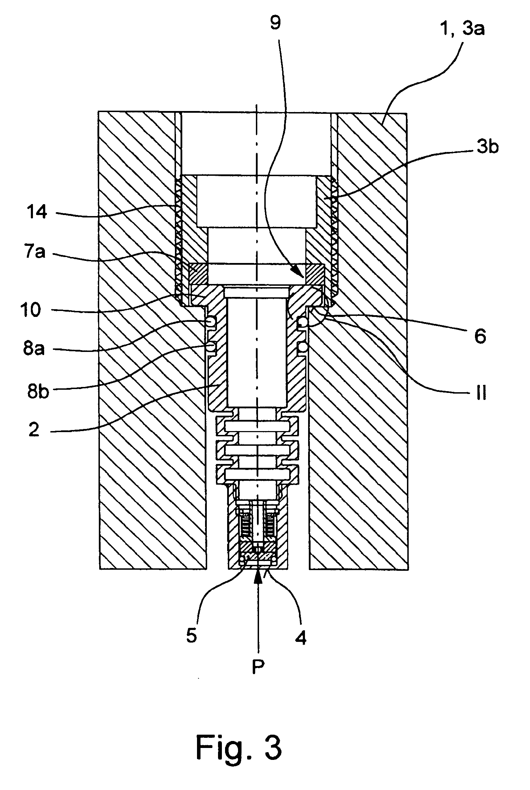

Bei den Ausführungsbeispielen gemäß den Fig. 3 und 4 sind das Wandlergehäuse 2 und die Gehäusehalterung 3a, 3b im Einbauzustand in Richtung P der resultierenden Druckbeaufschlagung durch einen Zwischenraum 15 voneinander beabstandet, wobei in dem Zwischenraum 15 wenigstens ein akustisches Entkopplungselement 7a angeordnet ist, wobei Material und Abmessungen des Entkopplungselements 7a so gewählt sind, dass eine möglichst geringe resultierende akustische Impedanzanpassung zwischen dem Wandlergehäuse 2 und dem Entkopplungselement 7a und der Gehäusehalterung 3a, 3b realisiert ist.

Bei dem Ultraschallwandler gemäß Fig. 4 sind in dem Zwischenraum 15 drei akustische Entkopplungselemente 7a, 7b, 7c angeordnet, nämlich benachbart zueinander in Richtung P der resultierenden Druckbeaufschlagung, wobei die Materialien und Abmessungen der Entkopplungselemente 7a, 7b, 7c so gewählt sind, dass eine möglichst geringe akustische Impedanzanpassung zwischen den Entkopplungselementen 7a, 7b und 7c resultiert.

Das Material der Entkopplungselemente 7a, 7b und 7c ist hinsichtlich seiner Elastizität so gewählt, das es von der erwarteten Druckbeaufschlagung durch das Medium etwas stauchbar ist, damit die vorbeschriebene Entspannung des Vorspannungselements 14 im Belastungsfall greift.

Bei allen dargestellten Ausfiihrungsbeispielen ist das Wandlergehäuse 2 im Wesentlichen senkrecht zur Richtung P der resultierenden Druckbeaufschlagung beabstandet in der Gehäusehalterung 3a, 3b gelagert, vorliegend durch Dichtringe 8a, 8b. Die Dichtringe 8a, 8b sind in Material und Abmessung so gewählt sind, dass eine möglichst geringe resultierende akustische Impedanzanpassung zwischen dem Wandlergehäuse 2 und den Dichtringen 8a, 8b und den Dichtringen 8a, 8b und der Gehäusehalterung 3a, 3b realisiert ist.

Bei dem Ultraschallwandler gemäß Fig. 4 weist das erste Halterungselement 3a an seinem Umfang Dichtringe 13a, 13b auf, mit denen das erste Halterungselement 3a im Einbauzustand des Ultraschallwandlers gegenüber dem nicht dargestellten Messgerätegehäuse abgedichtet ist.

## Patentansprüche

1. Ultraschallwandler zum Einbau in ein Messgerätegehäuse (1), wobei der Ultraschallwandler ein Wandlergehäuse (2) und eine Gehäusehalterung (3a, 3b) umfasst, wobei das Wandlergehäuse (2) im Einbauzustand über seine Sende- und/oder Empfangsseite (4) mit einem Mediumdruck beaufschlagbar ist, wobei die Gehäusehalterung (3a, 3b) ein erstes Halterungselement (3a) mit einer Schulter (11) und ein zweites Halterungselement (3b) umfasst, wobei das Wandlergehäuse (2) das erste Halterungselement (3a) durchdringt, wobei sich an einer Seite des ersten Halterungselements (3a) die Schulter (11) des ersten Halterungselements (3a) und eine Schulter (12) des Wandlergehäuses (2) gegenüberstehen, wobei das Wandlergehäuse (2) und die Gehäusehalterung (3a, 3b) im Einbauzustand in Richtung (P) der resultierenden Druckbeaufschlagung durch einen Zwischenraum (15) voneinander beabstandet sind, wobei in dem Zwischenraum (15) wenigstens ein akustisches Entkopplungselement (7a) angeordnet ist, wobei das Wandlergehäuse (2) im Einbauzustand mit der Gehäusehalterung (3a, 3b) zumindest mittelbar wenigstens eine erste Kontaktfläche (6) ausbildet, wobei die Kraft, mit der das Wandlergehäuse (2) im durch das Medium druckbeaufschlagten Einbauzustand zumindest mittelbar gegen die Gehäusehalterung (3a, 3b) in der ersten Kontaktfläche (6) drückt, von der resultierenden Druckbeaufschlagung des Wandlergehäuses (2) durch das Medium abhängt, und die Kraft und damit die Flächenpressung in der ersten Kontaktfläche (6) mit zunehmendem Mediumdruck auch zunimmt,
**dadurch gekennzeichnet,**
**dass** im Bereich der anderen Seite des ersten Halterungselements (3a) das zweite Halterungselement (3b) mit dem Wandlergehäuse (2) verbunden ist und dem ersten Halterungselement (3a) sperrend gegenübersteht, dass ein Vorspannungsmittel (14) zwischen dem ersten Halterungselement (3a) und dem zweiten Halterungselement (3b) vorgesehen ist und sich zum einen an dem ersten Halterungselement (3a) abstützt und sich zum anderen entweder an dem zweiten Halterungselement (3b) oder an dem Wandlergehäuse (2) abstützt, dass durch das Vorspannungsmittel (14) das Wandlergehäuse (2) und die Gehäusehalterung (3a, 3b) zumindest mittelbar in der ersten Kontaktfläche (6) mit vorhandener aber möglichst geringer Flächenpressung gegeneinander gedrückt sind und dass das Vorspannungsmittel (14) insgesamt so zwischen dem Wandlergehäuse (2) und der Gehäusehalterung (3a, 3b) wirksam ist, dass das Vorspannungsmittel (14) bei zunehmendem Mediumdruck zunehmend entspannt wird.

2. Ultraschallwandler nach Anspruch 1, **dadurch gekennzeichnet, dass** die durch das Vorspannungsmittel (14) verursachte, zumindest mittelbare Flächenpressung in der ersten Kontaktfläche (6) kleiner als 10 MPa ist, vorzugsweise kleiner als 7 MPa ist, ganz bevorzugt kleiner als 6 MPa ist und besonders bevorzugt kleiner als 5 MPa ist.

3. Ultraschallwandler nach Anspruch 1 oder 2, **dadurch gekennzeichnet, dass** die durch das Vorspannungsmittel (14) verursachte, zumindest mittelbare Flächenpressung in der ersten Kontaktfläche (6) größer als 0,001 MPa ist, vorzugsweise größer als 0,005 MPa ist, ganz bevorzugt größer als 0,01 MPa ist und besonders bevorzugt größer als 0,05 MPa ist.

4. Ultraschallwandler nach einem der Ansprüche 1 bis 3, **dadurch gekennzeichnet, dass** das zweite Halterungselement (3b) ein formschlüssiger Sicherungsring ist.

5. Ultraschallwandler nach einem der Ansprüche 1 bis 4, **dadurch gekennzeichnet, dass** das Vorspannmittel (14) als Federscheibe ausgestaltet ist, insbesondere als gewölbte Federscheibe.

6. Ultraschallwandler nach einem der Ansprüche 1 bis 5, **dadurch gekennzeichnet, dass** Material und/oder Abmessungen des Entkopplungselements (7a) so gewählt sind, dass eine möglichst geringe resultierende akustische Impedanzanpassung zwischen dem Wandlergehäuse (2) und dem Entkopplungselement (7a) und/oder dem Entkopplungselement (7a) und der Gehäusehalterung (3a, 3b) realisiert ist.

7. Ultraschallwandler nach einem der Ansprüche 1 bis 6, **dadurch gekennzeichnet, dass** in dem Zwischenraum (15) wenigstens zwei akustische Entkopplungselemente (7a, 7b, 7c) angeordnet sind, insbesondere benachbart zueinander in Richtung P der resultierenden Druckbeaufschlagung, wobei insbesondere die Materialen und/oder die Abmessungen der Entkopplungselemente (7a, 7b, 7c) so gewählt sind, dass eine möglichst geringe akustische Impedanzanpassung zwischen den Entkopplungselementen (7a, 7b, 7c) resultiert.

8. Ultraschallwandler nach einem der Ansprüche 1 bis 7, **dadurch gekennzeichnet, dass** das Wandlergehäuse (2) im wesentlichen senkrecht zur Richtung P der resultierenden Druckbeaufschlagung beabstandet in der Gehäusehalterung (3a, 3b) gelagert ist, insbesondere durch Dichtringe (8a, 8b).

## Claims

1. Ultrasonic transducer for installation in a measuring device housing (1), wherein the ultrasonic transducer includes a transducer housing (2) and a housing fixture (3a, 3b), wherein the transducer housing (2) can be impinged with a medium pressure via its emitting and receiving side (4) in the installed state, wherein the housing fixture (3a, 3b) includes a first fixture element (3a) having a shoulder (11) and a second fixture element (3b), wherein the transducer housing (2) runs through the first fixture element (3a), wherein the shoulder (11) of the first fixture element (3a) and a shoulder (12) of the transducer housing (2) are opposite one another on one side of the first fixture element (3a), wherein, in the installed state, the transducer housing (2) and the housing fixture (3a, 3b) are distanced from one another by a space (15) in the direction P of the resulting pressurization, wherein at least one acoustic decoupling element (7a) is arranged in the space (15), wherein the transducer housing (2) at least indirectly forms at least one contact area (6) in the installed state with the housing fixture (3a, 3b), wherein the force, with which the transducer housing (2) is at least indirectly pressed against the housing fixture (3a, 3b) in the first contact area (6) in the installed state having pressure caused by the medium, depends on the resulting pressurization of the transducer housing (2) by the medium, and the force and, with it, the surface pressure in the first contact area (6) also increase with increasing medium pressure,
**characterized in**
**that**, in an area of an opposite side of the first fixture element (3a), the second fixture element (3b) is connected to the transducer housing (2) and in a locking manner opposite the first fixture element (3a), that a pre-loading means (14) is provided between the first fixture element (3a) and the second fixture element (3b) and, on the one hand, is braced on the first fixture element (3a) and, on the other hand, is braced on either the second fixture element (3b) or the transducer housing (2), that the transducer housing (2) and the housing fixture (3a, 3b) are at least indirectly pressed against one another is a first contact area (6) with existing, but as slight as possible surface pressure by the pre-loading means (14) and that the pre-loading means (14) is essentially completely located between the transducer housing (2) and the housing fixture (3a, 3b) in such a manner that the pre-loading means (14) is increasingly unloaded with increasing medium pressure.

2. Ultrasonic transducer according to claim 1, **characterized in that** the at least indirect surface pressure in the first contact area (6) caused by the pre-loading means (14) is less than 10 MPa, preferably is less than 7 MPa, more preferably is less than 6 MPa and most preferably is less than 5 MPa.

3. Ultrasonic transducer according to claim 1 or 2, **characterized in that** the at least indirect surface pressure in the first contact area (6) caused by the pre-loading means (14) is greater than 0,001 MPa, preferably is greater than 0,005 MPa, more preferably is greater than 0,01 MPa and most preferably is greater than 0,05 MPa.

4. Ultrasonic transducer according to any one of claims 1 to 3, **characterized in that** the second fixture element (3b) is a positive-locking retaining ring.

5. Ultrasonic transducer according to any one of claims 1 to 4, **characterized in that** the pre-loading means (14) is formed as a spring washer, in particular as a curved spring washer.

6. Ultrasonic transducer according to any one of claims 1 to 5, **characterized in that** materials and/or dimensions of the decoupling element (7a) are chosen such that a low as possible acoustic impedance matching is implemented between the transducer housing (2) and the decoupling element (7a) and/or between the decoupling element (7a) and the housing fixture (3a, 3b).

7. Ultrasonic transducer according to any one of claims 1 to 6, **characterized in that** at least two decoupling elements (7a, 7b, 7c) are arranged in the space (15), in particular are adjacent to one another in the direction P of the resulting pressurization, wherein, in particular, the materials and/or dimensions of the decoupling elements (7a, 7b, 7c) are chosen such that a low as possible acoustic impedance matching results between the decoupling elements (7a, 7b, 7c).

8. Ultrasonic transducer according to any one of claims 1 to 7, **characterized in that** the transducer housing (2) is situated essentially perpendicular to the direction P of the resulting pressurization in the housing fixture (3a, 3b), spaced, in particular, using sealing rings (8a, 8b).

## Revendications

1. Convertisseur d'ultrasons destiné à être installé dans un boîtier d'appareil de mesure (1), le convertisseur d'ultrasons comprenant un boîtier de convertisseur (2) et une fixation de boîtier (3a, 3b), le boîtier de convertisseur (2) pouvant être sollicité dans l'état installé avec une pression de fluide par le biais de son côté émetteur et/ou récepteur (4), la fixation de boîtier (3a, 3b) comprenant un premier élément de fixation (3a) avec un épaulement (11) et un deuxième élément de fixation (3b), le boîtier de convertisseur (2) traversant le premier élément de fixation (3a), l'épaulement (11) du premier élément de fixation (3a) et un épaulement (12) du boîtier de convertisseur (2) étant opposés l'un à l'autre au niveau d'un côté du premier élément de fixation (3a), le boîtier de convertisseur (2) et la fixation de boîtier (3a, 3b), dans l'état installé, étant espacés l'un de l'autre par un espace intermédiaire (15) dans la direction (P) de la sollicitation par pression résultante, au moins un élément de découplage acoustique (7a) étant disposé dans l'espace intermédiaire (15), le boîtier de convertisseur (2), dans l'état installé, constituant avec la fixation de boîtier (3a, 3b) au moins indirectement au moins une première surface de contact (6), la force avec laquelle le boîtier de convertisseur (2) presse dans l'état installé sollicité par la pression de fluide au moins indirectement contre la fixation de boîtier (3a, 3b) dans la première surface de contact (6) dépendant de la sollicitation par pression résultante du boîtier de convertisseur (2) par le fluide, et la force et par conséquent la pression de surface dans la première surface de contact (6) augmentant aussi avec l'augmentation de la pression de fluide,
**caractérisé en ce que**
dans la région de l'autre côté du premier élément de fixation (3a), le deuxième élément de fixation (3b) est connecté au boîtier de convertisseur (2) et est opposé par effet de blocage au premier élément de fixation (3a), **en ce qu'**un moyen de précontrainte (14) est prévu entre le premier élément de fixation (3a) et le deuxième élément de fixation (3b) et s'appuie d'une part contre le premier élément de fixation (3a) et s'appuie d'autre part soit contre le deuxième élément de fixation (3b) soit contre le boîtier de convertisseur (2), **en ce que** le boîtier de convertisseur (2) et la fixation de boîtier (3a, 3b) sont pressés l'un contre l'autre par le moyen de précontrainte (14) au moins indirectement dans la première surface de contact (6) avec une pression de surface existante mais aussi faible que possible et **en ce que** le moyen de précontrainte (14) agit dans l'ensemble entre le boîtier de convertisseur (2) et la fixation de boîtier (3a, 3b) de telle sorte que le moyen de précontrainte (14) soit de plus en plus détendu avec l'augmentation de la pression de fluide.

2. Convertisseur d'ultrasons selon la revendication 1, **caractérisé en ce que** la pression de surface au moins indirecte provoquée par le moyen de précontrainte (14) dans la première surface de contact (6) est inférieure à 10 MPa, de préférence inférieure à 7 MPa, tout préférablement inférieure à 6 MPa et particulièrement préférablement inférieure à 5 MPa.

3. Convertisseur d'ultrasons selon la revendication 1 ou 2, **caractérisé en ce que** la pression de surface au moins indirecte provoquée par le moyen de précontrainte (14) dans la première surface de contact (6) est supérieure à 0,001 MPa, de préférence supérieure à 0,005 MPa, tout préférablement supérieure à 0,01 MPa et particulièrement préférablement supérieure à 0,05 MPa.

4. Convertisseur d'ultrasons selon l'une quelconque des revendications 1 à 3, **caractérisé en ce que** le deuxième élément de fixation (3b) est une bague de fixation par engagement positif.

5. Convertisseur d'ultrasons selon l'une quelconque des revendications 1 à 4, **caractérisé en ce que** le moyen de précontrainte (14) est configuré sous forme de rondelle élastique, en particulier sous forme de rondelle élastique cintrée.

6. Convertisseur d'ultrasons selon l'une quelconque des revendications 1 à 5, **caractérisé en ce que** le matériau et/ou les dimensions de l'élément de découplage (7a) sont choisis de telle sorte qu'une adaptation d'impédance acoustique résultante aussi faible que possible entre le boîtier de convertisseur (2) et l'élément de découplage (7a) et/ou l'élément de découplage (7a) et la fixation de boîtier (3a, 3b) soit réalisée.

7. Convertisseur d'ultrasons selon l'une quelconque des revendications 1 à 6, **caractérisé en ce que** dans l'espace intermédiaire (15) sont disposés au moins deux éléments de découplage acoustique (7a, 7b, 7c), en particulier adjacents les uns aux autres dans la direction P de la sollicitation par pression résultante, notamment les matériaux et/ou les dimensions des éléments de découplage (7a, 7b, 7c) étant choisis de telle sorte qu'il en résulte une adaptation d'impédance acoustique aussi faible que possible entre les éléments de découplage (7a, 7b, 7c).

8. Convertisseur d'ultrasons selon l'une quelconque des revendications 1 à 7, **caractérisé en ce que** le boîtier de convertisseur (2) est supporté essentiellement perpendiculairement à la direction P de la sollicitation par pression résultante à distance dans la fixation de boîtier (3a, 3b), en particulier par des bagues d'étanchéité (8a, 8b).
